(19) Europäisches Patentamt

European Patent Office

Office européen des brevets

(11) **EP 1 672 901 A1**

(12) **DEMANDE DE BREVET EUROPEEN**

(43) Date de publication:
**21.06.2006 Bulletin 2006/25**

(51) Int Cl.:
*H04M 11/06* [(2006.01)]     *H04L 27/26* [(2006.01)]
*H04B 3/32* [(2006.01)]

(21) Numéro de dépôt: **05112079.8**

(22) Date de dépôt: **13.12.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **14.12.2004 FR 0452959**

(71) Demandeur: **ST MICROELECTRONICS S.A.**
**92120 Montrouge (FR)**

(72) Inventeur: **Isson, Olivier**
**Voreppe 38340 (FR)**

(74) Mandataire: **de Beaumont, Michel et al**
**Cabinet Michel de Beaumont**
**1, rue Champollion**
**38000 Grenoble (FR)**

(54) **Transmission en VDSL entre deux groupes de modems**

(57)    L'invention concerne la transmission de données entre deux modems VDSL appartenant respectivement à deux groupes d'un même nombre de modems reliés deux à deux par des lignes d'un même câble, consistant, pour chaque porteuse (Ci), à déterminer un ensemble possible de valeurs en fonction du nombre (ABNji) de bits alloués à la porteuse, et à configurer, à partir de cet ensemble, un circuit (42) de recherche de la valeur de chaque échantillon reçu, par mise en oeuvre d'un algorithme de recherche du maximum de vraisemblance.

Fig 7

## Description

Domaine de l'invention

La présente invention concerne de façon générale les transmissions entre des modems VDSL (Very high rate Digital Subscriber Line) ou Zipper-VDSL qui utilisent les lignes téléphoniques comme support de transmission numérique à haut débit (de l'ordre de 50 mégabits par seconde). L'invention concerne plus particulièrement les transmissions entre deux groupes de modems situés physiquement aux deux extrémités d'un câble multi-lignes.

Un exemple d'application de la présente invention concerne les liaisons par câble entre deux équipements collectifs (centraux téléphoniques, répartiteurs, etc.) servant de relais de transmission à des communications VDSL. Des cartes électroniques comportant plusieurs modems VDSL sont alors généralement reliées d'un central à un autre par des liaisons filaires contenues dans un même câble.

Exposé de l'art antérieur

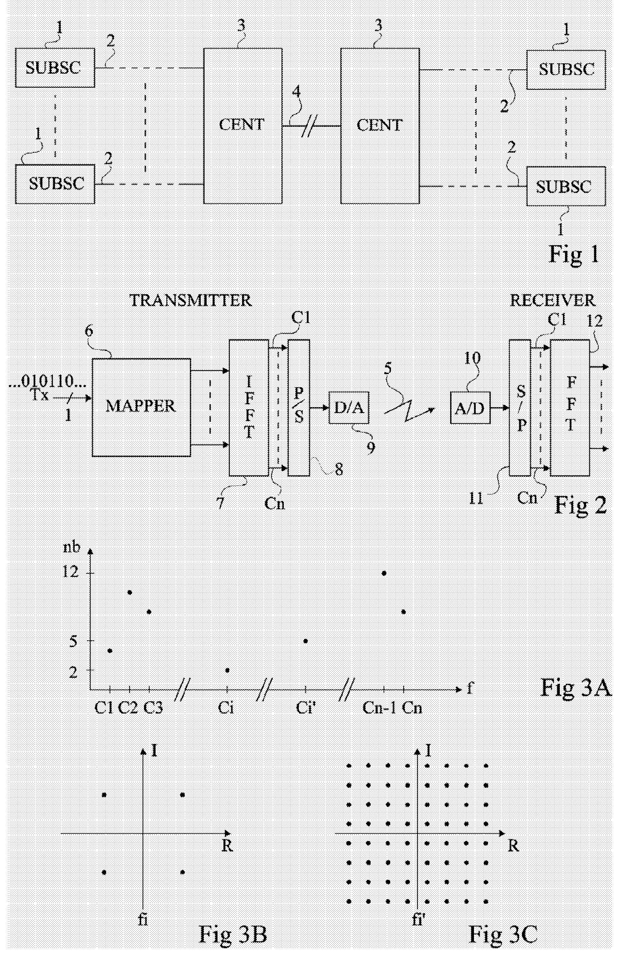

La figure 1 représente, de façon très schématique et sous forme de blocs, un exemple d'architecture d'un système de transmission VDSL.

Plusieurs abonnés 1 (SUBSC) individuellement connectés à une ligne téléphonique 2 communiquent par l'intermédiaire de centraux téléphoniques 3 (CENT) servant de relais de transmission entre les communications. Une communication entre deux abonnés transite généralement par plusieurs systèmes centraux. Pour simplifier la description de l'invention, on fera référence au terme central pour désigner indifféremment un répartiteur, sous-répartiteur, ou central, et plus généralement tout élément collectif servant d'intermédiaire à plusieurs communications, pourvu que des modems ou un autre élément collectif y soit reliés en partageant au moins une partie d'un câble multi-lignes. En particulier, il pourra s'agir d'une connexion entre un central et un serveur de données recevant plusieurs lignes de communication ou d'une connexion de plusieurs modems d'abonnés à un même central.

La figure 2 illustre de façon très schématique et sous forme de blocs, un exemple de structure d'émission-réception VDSL entre un modem émetteur (TRANSMITTER) et un modem récepteur (RECEIVER) reliés l'un à l'autre par une liaison filaire 5 de type ligne téléphonique.

Un flux de bits Tx à émettre est, dans la technologie VDSL, réparti sur plusieurs porteuses ou canaux en modulation QAM. Le nombre de porteuses et le nombre de bits transmis par porteuse dépend de la qualité de la liaison 5 et sont établis dans une phase d'initialisation de la transmission entre les deux modems.

La répartition des bits à transmettre sur les différentes porteuses s'effectue de façon numérique par un circuit 6 (MAPPER) qui fournit, à un bloc 7 de transformée de Fourier inverse (IFFT), les bits à moduler sur les différentes porteuses $C_1$ à $C_n$. Les données sont modulées en QAM sur ces porteuses, et les n sorties du bloc 7 sont sérialisées (bloc 8, P/S) avant une conversion numérique-analogique (bloc 9, D/A) pour être émises sur la ligne 5.

Côté récepteur, après une conversion analogique-numérique (bloc 10, A/D), les différentes porteuses ou différents canaux $C_1$ à $C_n$ sont individualisés par un convertisseur (bloc 11, S/P) série-parallèle, avant d'être envoyées sur un bloc 12 (FFT) effectuant une transformée de Fourrier directe pour fournir les données reçues à des circuits d'interprétation non représentés.

La représentation de la figure 2 est très schématique. En particulier, d'autres éléments d'émission-réception (notamment des têtes d'émission-réception analogiques) ainsi que des circuits de gestion du protocole VDSL sont présents dans les modems émetteurs et récepteurs mais n'ont pas été représentés pour simplifier la description. Pour plus de détails, on pourra se référer, par exemple, à la norme ANSI Draft Technical Document, Revision 14A "Very-high-speed Digital Subscriber Lines System Requirements" T1E1.4 May 1998.

La figure 3A illustre, par un graphique représentant le nombre nb de bits transmis en fonction de la fréquence f, un exemple de répartition du nombre de bits transmis sur les porteuses Ci (i compris entre 1 et n) dans une transmission VDSL. Dans l'exemple représenté, on suppose que la qualité de la ligne de transmission 5 n'autorise la transmission que de deux bits sur une porteuse Ci de fréquence $f_i$. Dans ce cas, les deux bits de cette porteuse sont codés en 4-QAM pour leur transmission comme l'illustre la figure 3B représentant les parties réelles R et imaginaires I de la constellation obtenue. Pour une deuxième porteuse $C_{i'}$ de fréquence $f_{i'}$, on suppose que l'état de la ligne 5 autorise la transmission de 6 bits. On utilise alors, pour cette fréquence $f_{i'}$, une constellation en 64-QAM comme l'illustre la constellation de figure 3C. Plus généralement, le nombre de bits conditionne la puissance de la modulation QAM. Pour p bits à transmettre, on utilise une modulation 2P-QAM.

Dans la technologie VDSL, des communications entre deux abonnés d'extrémité (1, figure 1) sont découpées en plusieurs transmissions entre différents centraux séparant les deux abonnés. A chaque central, les données sont démodulées et remodulées pour être transmises au relais suivant. Les porteuses utilisées et la répartition des bits sur ces porteuses sont susceptibles d'être différentes dans les transmissions successives en fonction de la liaison séparant le central émetteur du central récepteur suivant.

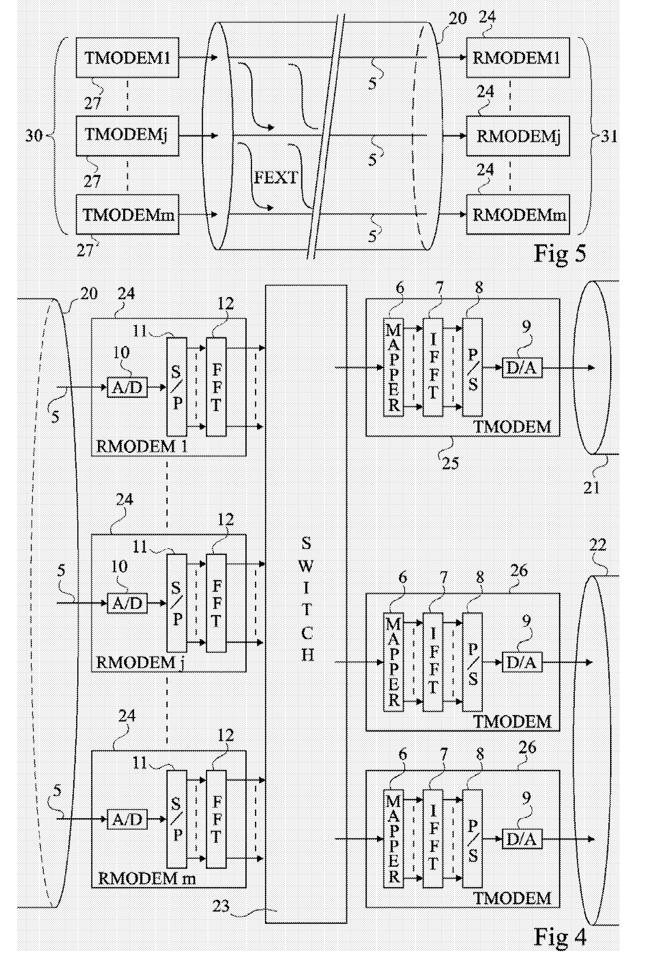

La figure 4 illustre de façon très schématique une telle caractéristique des réseaux VDSL et représente, sous forme de blocs, un exemple d'élément collectif de type répartiteur servant à relayer et redistribuer des communications qu'il reçoit par un câble 20 vers d'autres câbles 21 et 22 selon les destinataires. Pour simplifier, on ne se préoccupe en figure 4 que d'un seul sens de transmission (du câble 20 vers les câbles 21 et 22). Toutefois, dans la technologie VDSL, les communications sont bidirectionnelles, chaque modem comportant une partie émission et une partie réception. Le rôle de l'élément collectif dans l'exemple de la figure 4 est celui d'un répartiteur 23 (SWITCH) numérique comprenant m modems RMODEM connectés au câble 20. Un autre groupe de modems 25 (TMODEM) est connecté au câble 21 (pour simplifier, un seul modem 25 a été représenté). Un autre groupe de modems 26 (TMODEM) est relié au câble 22.

Chaque modem récepteur 24 ou émetteur 25 ou 26 a la structure d'un modem VDSL tel que décrit de façon simplifiée en relation avec la figure 2.

La présente invention concerne plus particulièrement la réception des données par le groupe de modems 24 dont les supports physiques (lignes 5) de transmission sont regroupés au moins pour une partie de leur trajet dans un même câble 20 reliant ces lignes 5 à un groupe de modems émetteurs.

La figure 5 représente, de façon très schématique, un premier groupe 30 de modems 27 (TMODEM1 à TMODEMm) partageant un même câble 20 regroupant les lignes 5 connectant les différents modems. Chaque modem 27 communique individuellement avec un modem 24 (RMODEM1 à RMODEMm) d'un deuxième groupe 31 reliés aux autres extrémités des lignes 5.

Quand plusieurs lignes téléphoniques ou supports de transmission physiques équivalents sont partagés par un même câble, cela engendre des problèmes de diaphonie. L'invention concerne plus particulièrement les problèmes de télédiaphonie (FEXT ou Far End Crosstalk) qui entraînent que le signal reçu par un modem correspond à une combinaison linéaire des données transmises sur le même canal par tous les modems de l'autre extrémité.

En notant X des données émises par un premier modem $M_j$ sur une ligne $5_j$ et Y des données émises par un deuxième modem $M_j$, de la même extrémité sur une deuxième ligne $5_{j'}$ du même câble pour un canal (porteuse) donné, les données reçues aux autres extrémités des lignes $5_j$ et $5_{j'}$ peuvent s'exprimer par les relations suivantes :

Pour la ligne $5_j$ : aX + bY + Nj ; et
Pour la ligne $5_{j'}$ ; cX + dY + Nj',

où a, b, c et d représentent les amplitudes respectives avec lesquelles sont reçues les données par les modems, et où Nj et Nj' représentent des bruits de fond additionnels généralement inférieurs aux bruits de télédiaphonie (bY pour la ligne 5j et cX pour la ligne 5j').

Pour simplifier les expressions ci-dessus, on a considéré le cas de deux modems. On notera toutefois que ces combinaisons linéaires sont fonction du nombre de modems partageant le câble.

Un inconvénient des bruits de diaphonie est qu'ils limitent les débits des transmissions sur les lignes.

En VDSL, une technique connue pour réduire les bruits de télédiaphonie consiste à multiplier, en réception, l'ensemble des données reçues par une matrice. En notant M cette matrice, 2 = HU + N le vecteur reçu avec H désignant la matrice de transfert de la liaison

$$(H = \begin{pmatrix} a & b \\ c & d \end{pmatrix}$$ pour les lignes 5j et 5j' ci-dessus), N représentant le bruit de fond et U le vecteur de sonnées (U =(X, Y)), on peut écrire un vecteur W comme étant égal au produit MZ donc MHU + MN. Ainsi, dans le cas où la matrice M est l'inverse de la matrice H, on obtient W = U + MN, ce qui revient à inverser le canal multilignes. Cette technique est décrite, par exemple, dans l'article "Vectored transmission for digital subscriber line systems " de G. Ginis et J-M. Cioffi, IEEE journal on selected areas in communications (juin 2002, vo1.20, N°5).

Un inconvénient de cette technique est que, pour un grand nombre de lignes, les calculs sont très complexes. De plus, l'application de cette technique engendre un bruit de l'ordre de MN qui peut être élevé. En outre, les taux d'erreurs de bits restent importants.

Résumé de l'invention

La présente invention vise à résoudre tout ou partie des inconvénients des systèmes connus.

La présente invention vise en particulier à réduire la puissance des bruits de diaphonie dans la réception de données par des modems VDSL, de façon à améliorer le débit de transmission.

Pour atteindre tout ou partie de ces objets ainsi que d'autres, la présente invention prévoit un procédé de transmission de données entre deux modems VDSL appartenant respectivement à deux groupes d'un même nombre de modems reliés deux à deux par des lignes partageant au moins une portion d'un même câble, consistant, pour chaque porteuse, à :

déterminer un ensemble possible de valeurs en fonction du nombre de bits alloués à la porteuse ; et
configurer, à partir de cet ensemble, un circuit de recherche de la valeur de chaque échantillon reçu, par mise en oeuvre d'un algorithme de recherche du maximum de vraisemblance.

Selon un mode de mise en oeuvre de la présente invention, l'ensemble de valeurs possibles est adapté dynamiquement en cas de modification du nombre de bits pour la porteuse considérée.

Selon un mode de mise en oeuvre de la présente invention, l'algorithme de recherche du maximum de vraisemblance est mis en oeuvre sur un sous-ensemble de valeurs possibles.

L'invention prévoit également un système de transmission de données en VDSL entre deux groupes de modems reliés deux à deux par des liaisons partageant au moins une portion d'un même câble, comportant, côté réception, un circuit de recherche du maximum de vraisemblance pour les échantillons reçus sur les différentes porteuses, l'ensemble de valeurs possibles étant fonction de la porteuse et du nombre de bits alloués à celle-ci.

Selon un mode de réalisation de la présente invention, l'ensemble de valeurs possibles est adapté dynamiquement au nombre de bits alloués à chaque porteuse.

L'invention prévoit également un équipement collectif d'un réseau de transmission en VDSL.

Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

les figures 1 à 5 qui ont été décrites précédemment sont destinées à exposer l'état de la technique et le problème posé ;
la figure 6 représente, de façon très schématique et sous forme de blocs, un mode de réalisation d'un circuit de réception de transmissions par plusieurs modems partageant au moins sur une portion du trajet un même câble multi-lignes selon la présente invention ;
la figure 7 représente, de façon fonctionnelle, un processeur de calcul du maximum de vraisemblance selon un mode de réalisation de la présente invention ;
les figures 8A à 8D illustrent le fonctionnement du procédé de transmission de données selon un mode de mise en oeuvre de l'invention ; et
la figure 9 illustre le fonctionnement d'un mode de réalisation préféré du procédé de l'invention.

Les mêmes éléments ont été désignés par les mêmes références aux différentes figures. Pour des raisons de clarté, seuls les éléments et étapes du procédé qui sont utiles à la compréhension de l'invention ont été représentés et seront décrits. En particulier, les détails constitutifs des modems VDSL en amont des transformées de Fourrier directes côté réception n'ont pas été représentés, l'invention étant compatible avec les structures classiques. De même, les protocoles d'affectation d'un nombre de bits par porteuse dans la technologie dite "Zipper-VDSL" n'a pas été détaillé, l'invention exploitant les protocoles classiques.

Description détaillée

Une caractéristique d'un mode de mise en oeuvre de la présente invention est de mettre en oeuvre, dans une transmission entre deux groupes de modems VDSL dans lesquels un modem de chaque groupe est relié à un modem de l'autre groupe par une liaison physique contenue au moins en partie dans un même câble que des liaisons reliant d'autres modems, une technique dite de recherche du maximum de vraisemblance (maximum likelihood) côté réception.

La recherche d'un maximum de vraisemblance dans une constellation de points reçus consiste à utiliser, côté récepteur, un jeu de définition des données susceptibles d'avoir été transmises par l'émetteur et à rechercher, dans ce jeu, la donnée transmise la plus vraisemblable.

La mise en oeuvre de cette technique est rendue possible car les données transmises sont des données numériques (des bits), ce qui permet d'établir un jeu de valeurs discrètes susceptibles d'être reçues par le modem récepteur.

Selon un mode de mise en oeuvre de l'invention, un jeu de données possibles est établi pour chaque canal (chaque porteuse).

La technique de réception de données par recherche du maximum de vraisemblance est en elle-même connue et est décrite, par exemple, dans l'ouvrage "Digital communications" de J.G. Proakis, publié par McGraw-Hill en 1995 (3ème édition).

La mise en oeuvre d'une technique de recherche du maximum de vraisemblance requiert de connaître le jeu possible des données reçues, qui dépend des caractéristiques de transmission de la ligne. Or, dans une transmission de type VDSL entre deux éléments collectifs ou entre un élément collectif et plusieurs terminaux utilisateurs et inversement, ces caractéristiques sont susceptibles de changer d'une initialisation à une autre de la transmission (voire dynamiquement). Par contre, tous les modems partagent au moins une partie du câble, le nombre de modems connectables est connu ainsi que le nombre maximum de porteuses.

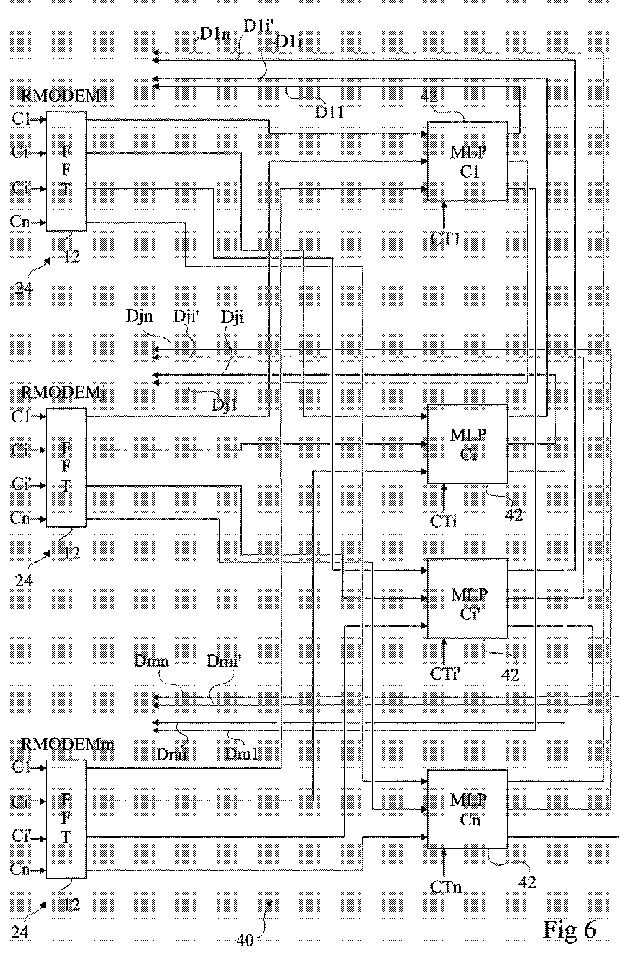

La figure 6 représente, de façon très schématique et sous forme de blocs, une architecture d'un processeur de calcul du maximum de vraisemblance 40 dans un équipement collectif de type central d'un réseau de communication mettant en oeuvre une technologie VDSL. Pour simplifier, seule la partie réception a été partiellement représentée en figure 6, les autres constituants étant classiques.

Comme précédemment, un groupe de modems 24 partageant un même câble (20, figure 5) est chargé de démoduler des données transmises par un groupe d'un même nombre de modems reliés à l'autre extrémité du câble. En figure 6, les modems 24 ont été représentés partiellement par leurs blocs respectifs 12 de calcul de transformées de Fourier (FFT). Chaque modem reçoit des données sur un nombre n de canaux $C_i$ correspondant aux porteuses dans le système de transmission VDSL. Les données sont transmises en modulation QAM avec un nombre de bits par porteuse dépendant d'une phase d'initialisation testant la qualité de la ligne de transmission. Si, comme dans l'exemple, on considère que chaque modem peut décoder des données sur n porteuses, n représente le nombre maximal de porteuses et le nombre de bits transmis sur certaines porteuses peut être nul en fonction de l'état de la liaison.

En pratique, lors de l'initialisation (par exemple, allumage du modem), un protocole d'échange s'établit entre le modem émetteur et le modem récepteur de façon à tester les débits possibles sur les différentes porteuses. Cette phase de test permet de configurer le modem émetteur pour qu'il transmette un certain nombre de bits sur chaque porteuse. Par la suite, en cours de communication, les débits de chaque porteuse ne peuvent pas être modifiées sans repasser par une phase d'initialisation à l'exception d'un échange de bit entre deux porteuses (processus appelé "bit swapping"). Si le débit de communication global ne peut pas être maintenu, la transmission est coupée et les deux modems redémarrent une phase d'initialisation.

Dans un mode de mise en oeuvre de l'invention, les protocoles d'allocation ou d'attribution des bits sur les différentes porteuses sont utilisés pour adapter, au moins à chaque initialisation, les ensembles de valeurs possibles servant à la recherche du maximum de vraisemblance.

Selon la présente invention, les sorties respectives des processeurs 12 de calcul des transformées de Fourier sont envoyées à l'un d'une pluralité (n) de circuits 42 de détermination, pour chaque porteuse $C_1$ à $C_n$, de la donnée transmise par application de recherche du maximum de vraisemblance de l'état de cette donnée. Chaque circuit 42 est affecté à une porteuse Ci et reçoit la sortie du circuit 12 de chaque modem correspondant à cette porteuse. Chaque circuit 42 fournit l'état de la donnée interprétée Dji (j compris entre 1 et m) au modem RMODEMj qui traite ensuite cette donnée de façon classique. Par conséquent, les sorties des circuits 42 sont envoyées aux circuits de traitement habituels de données reçues.

Le fait que le nombre de porteuses possibles soit connu (fixé par la norme VDSL), et que le nombre de modems partageant un même câble soit également connu (généralement, les éléments collectifs sont équipés de cartes d'un nombre de modem donné) rend réalisable l'architecture de la figure 6.

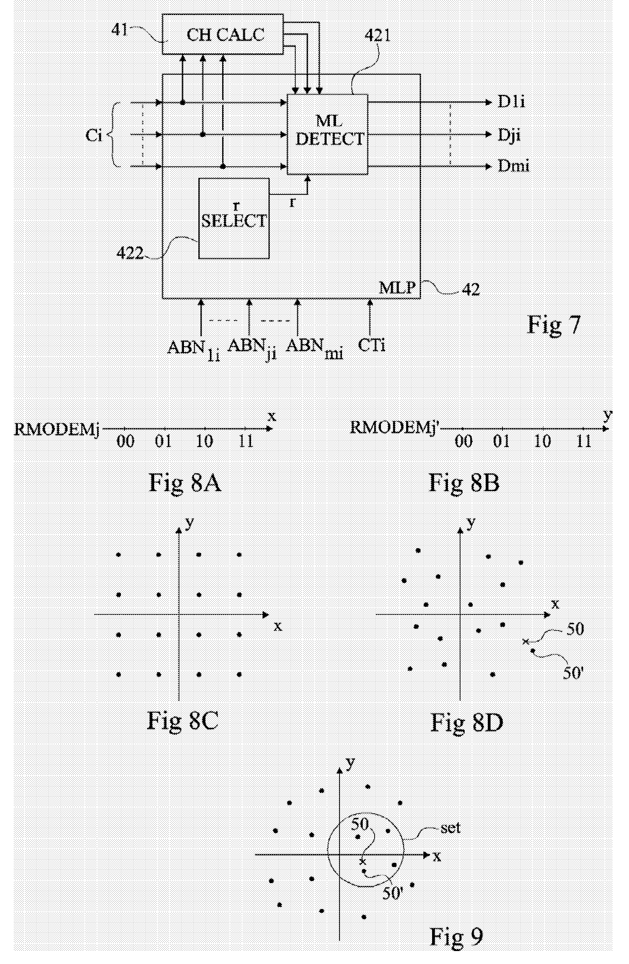

La figure 7 représente, de façon schématique, un mode de réalisation d'un processeur 42 de recherche du maximum de vraisemblance (MLP) affecté à une porteuse Ci. Les signaux des porteuses Ci provenant des différents modems de rang 1, ..., j, ..., m arrivent sur le circuit 42 et sont envoyés sur un circuit de détection 421 chargé de déterminer, dans un ensemble de valeurs possibles, les valeurs reçues par les différents modems. Les sorties du circuit 421 correspondent aux sorties (portant les données D1i,..., Dji, ..., Dmi) envoyées aux circuits 41 des différents modems.

Le détecteur 421 est configuré au moins en fonction des nombres ABN1i, ..., ABNji, ..., ABNmi de bits alloués pour chaque liaison à la porteuse correspondante. Selon l'invention, ce nombre ABN (compris entre 0 et le nombre maximum n prévu par la technologie VDSL) provient des circuits des modem récepteur qui ont servi, lors de l'initialisation de la communication, à établir le nombre de bits à transmettre par porteuse. D'autres signaux de commande CTi sont reçus par le circuit 42, en particulier, pour des besoins de configuration et de synchronisation.

La configuration du détecteur 421 est effectuée, par exemple, par un élément 41 (CH CALC) de calcul des fonctions de transfert (H) des liaisons, en fonction notamment des nombres ABN (que reçoit donc également l'élément 41). L'élément 41 peut être commun à tous les processeurs 42 dans la mesure où les fonctions de transfert prennent en compte à la fois les porteuses (i) et les liaisons (j).

La configuration des processeurs 42 est mise à jour au moins à chaque réinitialisation d'une des liaisons. De préférence, elle est ensuite mise à jour périodiquement et/ou à chaque modification du débit de deux porteuses par un système ("bit swapping") de transfert d'un bit d'une porteuse à une autre.

Dans le mode de réalisation de la figure 7, le circuit 42 comporte également un élément 422 de sélection de rayon de vraisemblance r dont le résultat est fourni au détecteur 421. Ce rayon correspond à la variation d'amplitude acceptable pour considérer qu'un point est dans une position attendue. La détermination de ce seuil dépend d'une modélisation, en elle-même classique, des perturbations apportées par la ligne (entre autres, la diaphonie). L'invention tire profit du fait que cette modélisation est toutefois stable pour une ligne donnée. En effet, dans des liaisons filaires de type lignes téléphoniques, la fonction de transfert de la transmission est stable entre deux équipements. Elle est susceptible d'être différente entre deux câbles successifs véhiculant la même transmission entre trois équipements successifs, mais reste relativement stable entre chaque paire d'éléments collectifs. C'est notamment pourquoi les débits des différentes porteuses sont différents d'un câble à un autre. En fait, si la fonction de transfert varie, cela entraîne, dans la technologie VDSL, une réallocation des débits sur les différents canaux, donc une reconfiguration des processeurs 42 par le ou les éléments 41.

Les figures 8A à 8D illustrent le fonctionnement d'un processeur de recherche du maximum de vraisemblance selon un mode de mise en oeuvre de l'invention. Pour simplifier la description, on suppose que seuls deux modems RMODEMj et RMODEMj' partagent le câble, ce qui permet de considérer un cas en deux dimensions. La transposition à un cas pratique multidimensionnel (dimension m) se déduit sans difficulté. De plus, on prend pour exemple des transmissions en modulation par saut d'amplitude (ASK ou "Amplitude Shift Keying") afin de clarifier l'exposé en ne se préoccupant que de la partie réelle. L'application à la modulation QAM ne change pas le principe.

On suppose que les modems j et j' transmettent chacun quatre valeurs possibles sur la porteuse i en modulation 4-ASK. Le nombre de bits transmis sur la porteuse i est donc égal à 2. Il en découle que (indépendamment des éventuels codages effectués) chaque modem peut transmettre un ensemble de valeurs 00, 01, 10 ou 11 par modulation 4-ASK (figures 8A et 8B). Ces valeurs ont été symbolisées sur un seul axe en raison de l'absence de partie imaginaire. Dans le cas d'une modulation QAM, les représentations seraient en deux dimensions comme aux figures 3B et 3C.

En raison du partage du support de transmission et de l'effet de télédiaphonie, les jeux de valeurs possibles peuvent être représentés en deux dimensions (figure 8C) correspondant aux différentes combinaisons possibles entre les jeux des deux modems RMODEMj et RMODEMj'. La représentation de la figure 8C ne correspond pas à la représentation d'une constellation en QAM, mais à des valeurs possibles pour la combinaison linaire des transmissions des différents modems sur une même porteuse (les axes correspondent aux axes x et y représentatifs des deux modems). Côté réception (figure 8D), la diaphonie modifie les valeurs (amplitudes) reçues pour chacun des points émis. Toutefois, comme il s'agit d'une transmission numérique et que seuls des états binaires sont susceptibles d'être reçus, les positions des points définissent un ensemble discret.

La recherche du maximum de vraisemblance consiste à rechercher le point 50' le plus proche d'un point 50 correspondant à la valeur reçue. En pratique et selon le mode représenté.

La mise en oeuvre d'une technique de recherche du maximum de vraisemblance dans la technologie VDSL est rendue possible non seulement par le fait qu'il s'agit d'une transmission numérique, mais également par le fait que les lignes partagent, au moins sur une portion, un même câble. Le plus souvent, les bruits de diaphonie sont en outre toujours inférieurs aux amplitudes des signaux transmis, ce qui améliore les performances.

La figure 9 illustre un mode de réalisation préféré de l'invention selon lequel la recherche du maximum de vraisemblance est limitée à un sous-ensemble des points possibles autour du niveau reçu pour la porteuse correspondante en application de la technique décrite dans l'article "On Sphere Decoding Algorithm. I. Expected Complexity) de B. Hassibi et H. Vikalo, publié dans la revue IEEE Transactions on Signal Processing. De façon simplifiée, cela revient à définir un cercle SET (dans l'exemple en deux dimensions) autour d'un échantillon 50 effectivement reçu. Cela permet d'accélérer le processus.

Un avantage de la présente invention est qu'elle permet d'accroître le débit dans des systèmes de transmission VDSL entre deux centraux ou plus généralement deux éléments collectifs du réseau de transmission qui sont reliés l'un à l'autre par un câble multi-lignes reliant deux groupes de même nombre de modems VDSL.

Bien entendu, la présente invention est susceptible de diverses variantes et modifications qui apparaîtront à l'homme de l'art. En particulier, la mise en oeuvre pratique de l'invention à partir des indications fonctionnelles données ci-dessus et en utilisant des outils matériels et/ou logiciels classiques est à la portée de l'homme du métier.

**Revendications**

1. Procédé de transmission de données entre deux modems VDSL appartenant respectivement à deux groupes (30, 31) d'un même nombre (m) de modems reliés deux à deux par des lignes (5j) partageant au moins une portion d'un même câble (20), **caractérisé en ce qu'**il consiste, pour chaque porteuse ($C_i$), à :

    déterminer un ensemble possible de valeurs en fonction du nombre de bits (ABNji) alloués à la porteuse ; et
    configurer, à partir de cet ensemble, un circuit (42) de recherche de la valeur de chaque échantillon (50) reçu, par mise en oeuvre d'un algorithme de recherche du maximum de vraisemblance.

2. Procédé selon la revendication 1, dans lequel l'ensemble de valeurs possibles est adapté dynamiquement en cas de modification du nombre de bits (ABNji) pour la porteuse considérée ($C_i$).

3. Procédé de transmission selon la revendication 1, dans lequel l'algorithme de recherche du maximum de vraisemblance est mis en oeuvre sur un sous-ensemble (SET) de valeurs possibles.

4. Système de transmission de données en VDSL entre deux groupes (30, 31) de modems reliés deux à deux par des liaisons (5j) partageant au moins une portion d'un même câble (20), **caractérisé en ce qu'**il comporte, côté réception, un circuit (40) de recherche du maximum de vraisemblance pour les échantillons reçus sur les différentes porteuses, l'ensemble de valeurs possibles étant fonction de la porteuse (Ci) et du nombre (ABNji) de bits alloués à celle-ci.

5. Système selon la revendication 4, dans lequel l'ensemble de valeurs possibles est adapté dynamiquement au nombre de bits (ABNji) alloués à chaque porteuse.

6. Equipement collectif d'un réseau de transmission en VDSL, **caractérisé en ce qu'**il comprend, dans sa chaîne de réception, des moyens pour la mise en oeuvre du procédé selon l'une quelconque des revendications 1 à 3.

**Fig 1**

TRANSMITTER

RECEIVER

**Fig 2**

**Fig 3A**

**Fig 3B**

**Fig 3C**

Fig 5

Fig 4

Fig 6

Fig 7

Fig 8A

Fig 8B

Fig 8C

Fig 8D

Fig 9

**Office européen des brevets**

# RAPPORT DE RECHERCHE EUROPEENNE

Numéro de la demande

EP 05 11 2079

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | GINIS G ET AL: "VECTORED TRANSMISSION FOR DIGITAL SUBSCRIBER LINE SYSTEMS" IEEE JOURNAL ON SELECTED AREAS IN COMMUNICATIONS, IEEE INC. NEW YORK, US, vol. 20, no. 5, juin 2002 (2002-06), pages 1085-1104, XP001143167 ISSN: 0733-8716 * page 1090, colonne de gauche, ligne SECTION III C, alinéa 4; figures 7,9 * ----- | 1-6 | H04M11/06 H04L27/26 H04B3/32 |
| Y | IEEE Transactions on Wireless Communications IEEE USA, vol. 3, no. 6, novembre 2004 (2004-11), pages 2299-2311, XP001228449 ISSN: 1536-1276 * le document en entier * ----- | 1-6 | |
| Y | GINIS G ET AL: "Vectored-DMT: a FEXT canceling modulation scheme for coordinating users" ICC 2001. 2001 IEEE INTERNATIONAL CONFERENCE ON COMMUNICATIONS. CONFERENCE RECORD. HELSINKY, FINLAND, JUNE 11 - 14, 2001, IEEE INTERNATIONAL CONFERENCE ON COMMUNICATIONS, NEW YORK, NY : IEEE, US, vol. VOL. 1 OF 10, 11 juin 2001 (2001-06-11), pages 305-309, XP010553013 ISBN: 0-7803-7097-1 * le document en entier * ----- | 1-6 | **DOMAINES TECHNIQUES RECHERCHES (IPC)** H04M H04L H04B |
| A | US 2003/086362 A1 (HASEGAWA KAZUTOMO ET AL) 8 mai 2003 (2003-05-08) * le document en entier * ----- | 1-6 | |

Le présent rapport a été établi pour toutes les revendications

| Lieu de la recherche | Date d'achèvement de la recherche | Examinateur |
|---|---|---|
| Munich | 30 janvier 2006 | Ricciardi, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 11 2079

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-01-2006

| Document brevet cité au rapport de recherche | Date de publication | Membre(s) de la famille de brevet(s) | Date de publication |
|---|---|---|---|
| US 2003086362 A1 | 08-05-2003 | JP 2003174386 A | 20-06-2003 |